# EUROPEAN PATENT SPECIFICATION

(11) **EP 1 069 560 B1**
(45) Date of publication and mention of the grant of the patent: **08.05.2002**
(21) Application number: 00114904.6
(22) Date of filing: 14.07.2000
(51) Int. Cl.: G11B 19/02, G11B 27/10

(54) **Apparatus for reproducing information and method of controlling the apparatus**
Vorrichtung zur Informationswiedergabe sowie Verfahren zum Steuern der Vorrichtung
Appareil de lecture d'information et méthode de commande de l' appareil

(30) Priority: 14.07.1999 JP 19982299
(43) Date of publication of application: 17.01.2001
(73) Proprietor: Pioneer Corporation, Meguro-ku, Tokyo (JP)
(72) Inventor: Shumura, Yoji, Oaza-Yamada, Kawagoe-shi, Saitama-ken (JP); Iijima, Takayuki, Oaza-Yamada, Kawagoe-shi, Saitama-ken (JP); Yamanoi, Katsuaki, Oaza-Yamada, Kawagoe-shi, Saitama-ken (JP); Abe, Shinichiro, Oaza-Yamada, Kawagoe-shi, Saitama-ken (JP); Miyagawa, Tomoko, Oaza-Yamada, Kawagoe-shi, Saitama-ken (JP); Matsumoto, Hiroyuki, Oaza-Yamada, Kawagoe-shi, Saitama-ken (JP); Oogami, Kazuhiko, Oaza-Yamada, Kawagoe-shi, Saitama-ken (JP)
(74) Representative: Klingseisen, Franz, Dipl.-Ing.

(56) References cited:
- US-A- 5 457 672
- US-A- 5 654 946
- US-A- 5 831 946
- PATENT ABSTRACTS OF JAPAN vol. 017, no. 189 (P-1521), 13 April 1993 (1993-04-13) & JP 04 339386 A (SONY CORP), 26 November 1992 (1992-11-26)
- PATENT ABSTRACTS OF JAPAN vol. 016, no. 527 (P-1447), 29 October 1992 (1992-10-29) & JP 04 195787 A (MATSUSHITA ELECTRIC IND CO LTD), 15 July 1992 (1992-07-15)
- PATENT ABSTRACTS OF JAPAN vol. 011, no. 375 (P-644), 8 December 1987 (1987-12-08) & JP 62 145577 A (SANYO ELECTRIC CO LTD;OTHERS: 01), 29 June 1987 (1987-06-29)
- PATENT ABSTRACTS OF JAPAN vol. 017, no. 189 (P-1521), 13 April 1993 (1993-04-13) & JP 04 339382 A (MITSUBISHI ELECTRIC CORP), 26 November 1992 (1992-11-26)

## Description

### BACKGROUND OF THE INVENTION

### 1. Field of the Invention

The present invention relates to apparatus for reproducing information recorded on an optical disk such as a mini disk (hereinafter called MD).

### 2. Description of the Related Art

A compact disk (hereinafter called CD) has been used as an optical disk on which sound information or various data is recorded. In recent years, however, an MD has become as popular as a CD is, because the MD is smaller than the CD but has equivalent reproducing time as the CD has, and is available to be recorded information on it.

When information recorded on the MD is reproduced by an MD reproducing device, the information is read from the MD at a data transmission rate of 1.4 Mb/s, and temporarily recorded in a memory, called shock proof memory. However the information is compressed down to one-fifth of an original information amount at the time of recording by ATRAC (Adaptive Transform Acoustic Coding) encoder. Therefore information whose amount corresponds to the amount of information read at a data transmission rate of about 300 kb/s in the information read at a data transmission rate of about 1.4 Mb/s enables decoding into a music signal and reproduction. Then the information is read from the shock proof memory at a data transmission rate of about 0.3 Mb/s, and decompressed up to five times amount of the information by ATRAC (Adaptive Transform Acoustic Coding) decoder. Further the information is converted into analog output, and reproduced.

Since there is difference between a data transmission rate for writing to the memory and reading from the memory, it is possible to temporarily store information read from the optical disc in the memory, and sequentially read the stored information to reproduce. For example, in the case that the capacity of the memory is 1 Mbit, it is possible to store information in the memory whose amount is the equivalent of about three seconds on reproduction time basis. Therefore if a spot of laser beam goes off position on a track because of movement of the optical pick up 2 by given vibration, it is possible to prevent interruption of reproduction by putting the spot on the track during reproduction of stored signals.

However if a power supply of the reproducing device is turned off, all of stored information is erased. Therefore the information being reproduced at the time when the power supply is turned off can not be reproduced again at the time when the power supply is turned on unless the information is read again by the optical pick up.

In a conventional MD reproducing device, if the power supply is turned off, the optical pick up stops at the position where it is reading information such as US 5 457 672. In US 831 946, the stop position is memorized. In both documents, data is read from a data buffer upon playback resume.

Therefore if the power supply is turned on again, it is necessary to move the optical pick up and search the position of the information to be reproduced on the basis of stored address information. After the position is found, the information is read and reproduced.

As mentioned above, in the conventional MD reproducing device, it takes a lot of time before any sound goes off in the case that the power supply is turned on after it was turned off during reproduction of information.

### SUMMARY OF THE INVENTION

It is therefore an object of the present invention to provide an apparatus for reproducing information that can reproduce information quickly in the case that the power supply is turned on after it was turned off during reproduction of information. Further another object of the present invention to provide a controlling method of controlling the apparatus that can reproduce information quickly in the case that the power supply is turned on after it was turned off during reproduction of information.

The above object of the present invention can be achieved by an apparatus for reproducing information recorded in an information recording medium. The apparatus for reproducing information is provided with: a pick up device for reading information recorded in the information recording medium; a memory device for memorizing the information read by the pick up device; a reproducing device for reproducing the information memorized in the memory device; a turning-off processing device for performing a turning-off operation to turn a power of the apparatus off; and a controlling device for moving the pick up device toward a certain position if the turning-off operation is performed by the turning-off processing device during the reproduction, wherein the certain position corresponds to a recording position in the information recording medium where the information reproduced at the time of the turning-off operation is recorded.

According to the apparatus for reproducing information, a pick up device reads information recorded in the information recording medium. Further a memory device memorizes the information read by the pick up device. Then a reproducing device reproduces the information memorized in the memory device. Accordingly a recording position of information reproduced by the reproducing device is different form that of information read by the pick up. However if the turning-off operation is performed by the turning-off processing device during the reproduction, a controlling device moves the pick up device toward a certain position which corresponds to a recording position in the information recording medium where the information reproduced at the time of the turning-off operation is recorded.

Therefore if the power is turned on after that, the information reproduced at the time of the turning-off operation is immediately read by the pick up device, and is reproduced again by the reproducing device.

In one aspect of the apparatus for reproducing information, the controlling device stores position information indicating the recording position in the information recording medium where the information reproduced at the time of the turning-off operation is recorded. Then if the turning-off operation is performed by the turning-off processing device during the reproduction, the controlling device moves the pick up device to the certain position corresponding to the recording position according to the position information .

According to this aspect, if the power is turned on after that, the information reproduced at the time of the turning-off operation is immediately read by the pick up device, and is reproduced again by the reproducing device.

In another aspect of the apparatus for reproducing information, if the turning-off operation is performed by the turning-off processing device during the reproduction, the controlling device moves the pick up device near to the certain position corresponding to said recording position.

According to this aspect, if the power is turned on after that, the pick up device exists near to the certain position corresponding to said recording position in the information recording medium where the information reproduced at the time of the turning-off operation is recorded. Therefore it is possible to move the pick up just to the certain position corresponding to the recording position. Consequently the information reproduced at the time of the turning-off operation is immediately read by the pick up device, and is reproduced again by the reproducing device. Moreover it is not necessary to back up the contents of the memory, so that electric power consumption is not increased.

In another aspect of the apparatus for reproducing information, if the turning-off operation is performed by the turning-off processing device during the reproduction, the controlling device moves the pick up device in a direction of the certain position corresponding to the recording position.

According to this aspect, if the power is turned on after that, the pick up device exists near to the certain position corresponding to the recording position in the information recording medium where the information reproduced at the time of the turning-off operation is recorded. Therefore it is possible to move the pick up just to the certain position corresponding to the recording position. Consequently the information reproduced at the time of the turning-off operation is immediately read by the pick up device, and is reproduced again by the reproducing device.

In another aspect of the apparatus for reproducing information, the turning-off processing device turns the power of the apparatus off after the pick up device has been moved toward the certain position.

According to this aspect, if the power is turned on after that, the pick up device exists just or near to the certain position corresponding to the recording position in the information recording medium where the information reproduced at the time of the turning-off operation is recorded. Therefore the information reproduced at the time of the turning-off operation is immediately read by the pick up device, and is reproduced again by the reproducing device. Consequently the necessary time for starting reproducing information after the power is turned on is remarkably reduced.

The above another object of the present invention can be achieved by a controlling method of controlling an information reproducing apparatus for reproducing information recorded in an information recording medium. The controlling method is provided with: a reading process of reading information recorded in the information recording medium by a pick up device; a memorizing process for memorizing the information read by the pick up device in a memory device; a reproducing process of reproducing the information memorized in the memory device; a turning-off process of performing a turning-off operation to turn a power of the apparatus off; and a controlling process of moving the pick up device toward a certain position if the turning-off operation is performed during the reproduction, wherein the certain position corresponds to a recording position in the information recording medium where the information reproduced at the time of the turning-off operation is recorded.

According to the controlling method of controlling an information reproducing apparatus, a reading process reads information recorded in the information recording medium by a pick up device. Further a memorizing process memorizes the information read by the pick up device in a memory device. Then a reproducing process reproduces the information memorized in the memory device. Accordingly a recording position of information reproduced by the reproducing device is different form that of information read by the pick up. However if the turning-off operation is performed during the reproduction, a controlling process moves the pick up device toward a certain position which corresponds to a recording position in the information recording medium where the information reproduced at the time of the turning-off operation is recorded.

Therefore if the power is turned on after that, the information reproduced at the time of the turning-off operation is immediately read by the pick up device, and is reproduced again by the reproducing device.

In one aspect of the controlling method of controlling an information reproducing apparatus, the controlling process stores position information indicating the recording position in the information recording medium where the information reproduced at the time of the turning-off operation is recorded. Then if the turning-off operation is performed during the reproduction, the controlling device moves the pick up device to the certain position corresponding to the recording position according to the position information .

According to this aspect, if the power is turned on after that, the information reproduced at the time of the turning-off operation is immediately read by the pick up device, and is reproduced again by the reproducing device.

In another aspect of the controlling method of controlling an information reproducing apparatus, if the turning-off operation is performed during the reproduction, the controlling process moves the pick up device near to the certain position corresponding to the recording position.

According to this aspect, if the power is turned on after that, the pick up device exists near to the certain position corresponding to said recording position in the information recording medium where the information reproduced at the time of the turning-off operation is recorded. Therefore it is possible to move the pick up just to the certain position corresponding to the recording position. Consequently the information reproduced at the time of the turning-off operation is immediately read by the pick up device, and is reproduced again by the reproducing device. Moreover it is not necessary to back up the contents of the memory, so that electric power consumption is not increased.

In another aspect of the controlling method of controlling an information reproducing apparatus, if the turning-off operation is performed, the controlling process moves the pick up device in a direction of the certain position corresponding to the recording position.

According to this aspect, if the power is turned on after that, the pick up device exists near to the certain position corresponding to the recording position in the information recording medium where the information reproduced at the time of the turning-off operation is recorded. Therefore it is possible to move the pick up just to the certain position corresponding to the recording position. Consequently the information reproduced at the time of the turning-off operation is immediately read by the pick up device, and is reproduced again by the reproducing device.

In another aspect of the controlling method of controlling an information reproducing apparatus, the turning-off process turns the power of the apparatus off after the pick up device has been moved toward the certain position.

According to this aspect, if the power is turned on after that, the pick up device exists just or near to the certain position corresponding to the recording position in the information recording medium where the information reproduced at the time of the turning-off operation is recorded. Therefore the information reproduced at the time of the turning-off operation is immediately read by the pick up device, and is reproduced again by the reproducing device. Consequently the necessary time for starting reproducing information after the power is turned on is remarkably reduced.

### BRIEF DESCRIPTION OF THE DRAWINGS

FIG. 1 is a block diagram showing outline construction of an MD recording/reproducing apparatus as an embodiment of the present invention;
FIG. 2A is a view for showing outline construction of a recordable MD;
FIG. 2B is a view for showing outline construction of an information recording area of the recordable MD;
FIG. 3 is a view for showing a data structure of MD in the embodiment;
FIG. 4 is a view for explaining showing fundamental principle of shock proof in the embodiment;
FIG. 5 is a view for explaining intermittent reading operation in the embodiment;
FIG. 6 is a view for explaining method of management of a recording information using UTOC of the recordable MD in the embodiment;
FIG. 7 is a flow diagram of process of moving a pick up in the first embodiment;
FIG. 8A is a view for explaining the position of the optical pick up just after a turning-off operation is selected in the first embodiment;
FIG. 8B is a view for explaining the position of the optical pick up just before a power is turned off in the first embodiment;
FIG. 8C is a view for explaining the position of the optical pick up just after a power is turned on again in the first embodiment;
FIG. 9 is a flow diagram of process of moving a pick up in the second embodiment;
FIG. 10A is a view for explaining the position of the optical pick up just after a turning-off operation is selected in the second embodiment;
FIG. 10B is a view for explaining the position of the optical pick up just before a power is turned off in the second embodiment;
FIG. 10C is a view for explaining the position of the optical pick up just after a power is turned on again in the second embodiment;
FIG. 11 is a flow diagram of process of moving a pick up in the third embodiment;
FIG. 12A is a view for explaining the position of the optical pick up just after a turning-off operation is selected in the third embodiment;
FIG. 12B is a view for explaining the position of the optical pick up just before a power is turned off in the third embodiment;
FIG. 12C is a view for explaining the position of the optical pick up just after a power is turned on again in the third embodiment;
FIG. 13 is a perspective view showing outline construction of an MD recording/reproducing apparatus in the fourth embodiment;
FIG. 14 is a flow diagram of process of moving a pick up in the fourth embodiment;
FIG. 15A is a view for explaining the position of the optical pick up just after a turning-off operation is selected in the fourth embodiment;
FIG. 15B is a view for explaining the position of the optical pick up just before a power is turned off in the fourth embodiment; and
FIG. 15C is a view for explaining the position of the optical pick up just after a power is turned on again in the fourth embodiment.

### DETAILED DESCRIPTION OF THE PREFERRED EMBODIMENTS

Referring to the accompanying drawings, embodiments of the present invention will be explained. In the following explanation, the present invention is adapted for an MD recording/reproducing device having a function of reproducing and recording information.

### (First embodiment)

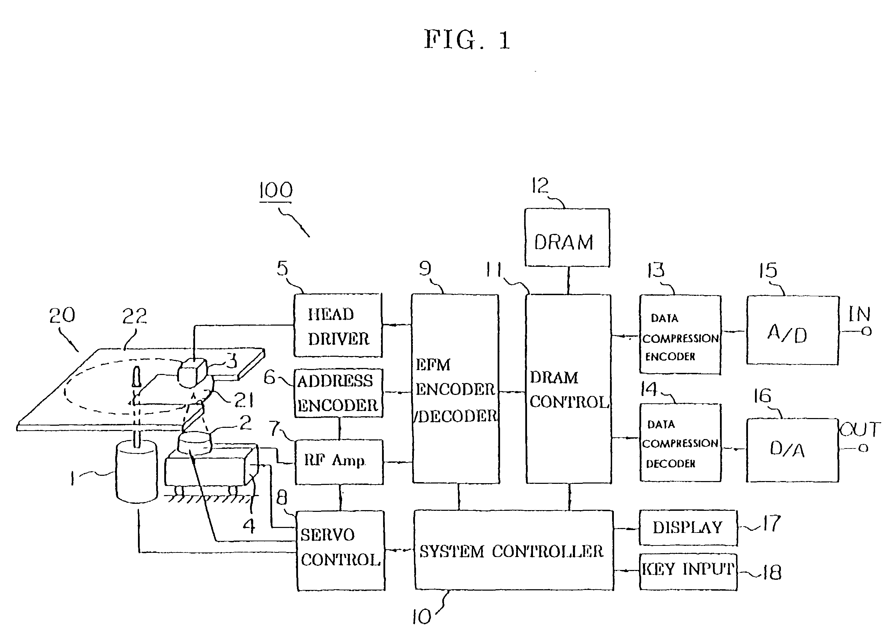

The first embodiment of the MD recording/reproducing device of the present invention is explained with FIG. 1.

### [1] Outline Construction of MD recording/reproducing device

In FIG. 1, an MD 20 as an information recording medium consists of an optical disk body 21 and a cartridge 22 which protects the optical disk body 21. Several kinds of MD are available to use in this device. In this embodiment, a recordable disc for recording and reproducing using a Magneto-optical disc (MO) is used as the MD 20. However the below-mentioned processing of moving of an optical pick up 2 does not depend on the variety of MD. Therefore it is adapted for a pre-master MD (music MD) in which music contents is recorded in advance only for reproduction.

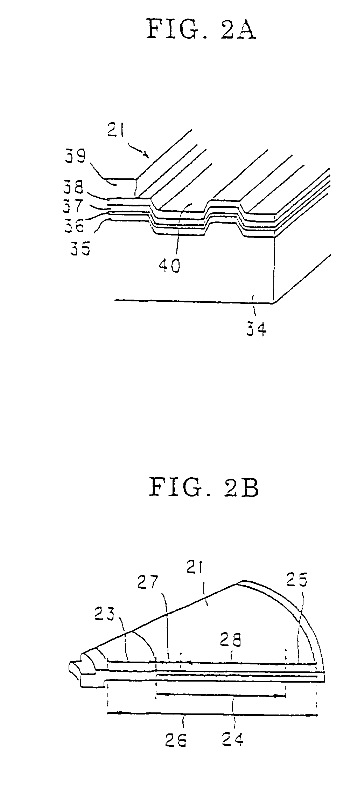

As shown in FIG. 2A, the optical disk body 21 of the recordable MD for recording/reproducing use includes a dielectric membrane 35, an MO (Magneto-Optical disk) membrane 36, a dielectric membrane 37, a reflecting membrane 38 and a protecting membrane 39 on a substrate 34 constructed from poly-carbonate, having a guide groove 40 called pre-groove. The guide groove 40 has walls at both sides which are wobbled with an FM modulated frequency according to address information. In an MD, the portion where any information recorded is called an information area. As shown in FIG. 2B, the information area 26 of the recordable MD consists of a lead-in area 23 in which information of disc and the like are recorded, a recordable area 24 in which information of music and index are available to be recorded, and a lead-out area 25. The recordable area 24 consists of a UTOC area 27 in which a UTOC (User Table Of Contents) including index information is recorded and a program area 28 in which information of music and the like are recorded. The above-mentioned guide groove 40 is formed throughout recordable area 24 so that address information is available to be read from the MD 20 even if it is a blank MD in which nothing is recorded. Further a position of a pick up is identified by reading the address information.

As shown in FIG. 1, an MD recording/reproducing device 100 in which the above-mentioned MD 20 is available to be inserted and ejected, includes a spindle motor 1, undescribed actuator, the optical pick up 2, and an RF (Radio Frequency) amplifier 7. The spindle motor 1 is a motor which rotates the optical disc body 21 of the MD 20 and is controlled to rotate the optical disc body 21 at a constant linear speed. The optical pick up 2 irradiates a laser beam to the optical disc body 21 which is rotated by the spindle motor 1 and outputs RF signals corresponding to reflected light of the laser beam.

In the recordable MD, digital signals "1" and "0" are converted to magnetic polarities "N" and "S", which are recorded on a recording surface of the recordable MD. When the optical pick up 2 irradiates a laser beam onto the recording surface, Kerr effect is generated on a magnetic membrane of the recording surface. The plane of polarization of reflecting light slightly rotates counterclockwise or clockwise in accordance with the magnetic polarities "N" and "S". The optical pick up 2 includes two photoreceptor devices. When the reflecting light passes through a polarization beam splitter, the amount of split to the two photoreceptor devices varies with the planes of polarization rotating in accordance with the magnetic polarity "N" or "S". Therefore digital signal "1" or "0" is available to read by obtaining the difference of output between the two photoreceptor devices in the RF amplifier 7.

The MD recording/reproducing device 100 includes an address decoder 6, an EFM encoder/decoder 9, a magnetic head 3, and a drive circuit for head 5.

The address decoder 6 reads address information by detecting a wobbling frequency out of an RF signal. The address decoder 6 enables reading of address in unrecorded area of the optical disc body 21 and detecting the position of the optical pick up 2.

The EFM encoder/decoder 9 has both functions of an EFM (Eight to Fourteen Modulation) encoder and an EFM decoder. At the time of recording information, The EFM encoder/decoder 9 works as the EFM encoder and modulates a signal to be recorded with an EFM signal. However in the recordable MD magnetic modulation scheme is adopted against optical modulation which is adopted in a CD-R and the like. Therefore the modulated signal is provided to the head drive circuit 5. On the other hand, at the time of reproducing information the EFM encoder/decoder 9 works as the EFM decoder and extracting an EFM signal from an RF signal amplified by the RF amplifier 7 to demodulate it.

The head driver circuit 5 drives a magnetic head 3 on the basis of recording signal EFM modulated. Once laser beam is irradiate to a spot on magnetic membrane of the MD 20 by the optical pick up 2, the spot is heated to more than Curie point. Then the magnetic head 3 magnetizes the spot in the magnetic orientation on the basis of EFM modulated recording signal. As mentioned above, the MD recording/reproducing device 100 writes information to the recordable MD in magnetic modulation. In case of using optical modulation, pits are formed on a recording medium by a laser beam irradiation. One portion of the pits which are initially irradiated becomes small, however, the other portion which is latterly irradiated becomes large. Therefore the pits are likely to be formed in tear-drop shape. This often results in cause of jitter given at the reading a signal. On the other hand, in using magnetic modulation, a laser diode just keeps on irradiating at a constant power, so that a symmetric pattern in which N pole and S pole get lined up consecutively is formed. This has an important advantage of being highly resistant to a tilt of a disc.

The MD recording/reproducing device 100 includes a DRAM 12, a DRAM control circuit 11, an AID converter 15, a data compression encoder 13, a data compression decoder 14, and a D/A converter 16.

The DRAM 12 is a temporary memory storing information data whose amount is about 1 M bit during reproduction and record. The DRAM 12 is used for prevention of interruption of reproduction which is happened because of shock and the like. This is called shock proof memory.

The DRAM control circuit 11 controls input/output of data from/to the DRAM 12 by outputting a predetermined control signal to the DRAM 12. During reproduction, the DRAM control circuit 11 input decoded data from the EFM encoder/decoder 9 and write it to the DRAM 12. Further, as necessary, the DRAM control circuit 11 outputs the data to the data compression encoder (ATRAC encoder) 13. During record, the DRAM control circuit 11 writes the data inputted from the data compression decoder (ATRAC decoder) 14 to the DRAM 12, and as necessary, outputs it to the EFM encoder/decoder 9. The system controller 10 controls the DRAM control circuit 11 in timing with reading data out of the optical disc body 21 and writing it to the optical disc body 21.

The A/D converter 15 converts an analog information signal inputted out of an external during recording into a digital signal. In this embodiment a sampling frequency of 44.1 kHz is used for A/D converter 15.

The data compression encoder 13 compresses data by using ATRAC (Adaptive Transform Acoustic Coding) system. In the ATRAC system the amount of data is reduced up to one-fifth of the original information amount. In the ATRAC system the amount of converted digital signal is compressed by using threshold of hearing characteristics of human being's ear and masking characteristics of hearing without thinning out data simply.

The data compression decoder 14 decompresses the data, which is read out of the optical disc body 21 and EFM modulated during reproduction, by reversing the procedure of compression in ATRAC system, and outputted a digital audio signal.

The D/A converter 16 converts a decoded digital audio signal into an analog signal.

The MD recording/reproducing device 100 includes a carriage 4, a spindle motor 1, a servo-control circuit 8 and a system controller 10.

The carriage 4 moves the optical pick up 2 and the magnetic head 3 to the direction of the radius of the optical disc body 21. The magnetic head 3 is attached to the optical pick up 2 through an arm. The magnetic head 3 and the optical pick up 2 face each other through the optical disc 21 and move together. In this manner it is available to set up the magnetic head 3 and the optical pick up 2 in the position opposed to a requested address on the optical disc 21. It is also available to read and write data in the position with reliability.

The spindle motor 1 rotates the optical disc body 21 at a constant velocity. The spindle motor 1 is controlled by the servo-control circuit 8.

The servo-control circuit 8 controls the carriage 4, the spindle motor 1, and undescribed actuator by using servo system. The servo-control circuit 8 receives an RFsignal from the RF amplifier 7, and extracts a control signal from the RF signal, and sends the control signal to control the carriage 4 and the undescribed actuator. In this manner the servo-control circuit 8 accomplishes tracking-servo operation to keep a spot of a laser beam on the recording track line of the optical disc body 21. Further, the servo-control circuit 8 extracts a control signal from the RF signal, and sends the control signal to control the undescribed actuator. In this manner the servo-control circuit 8 accomplishes focusing-servo operation to keep irradiation of a laser beam on the focusing position of the optical disc body 21. Moreover, the servo-control circuit 8 sends the control signal on the basis of a clock signal included in an EFM signal from the EFM encoder/decoder 9 to rotate the spindle motor 1 at a constant velocity. In this manner the servo-control circuit 8 accomplishes spindle-servo operation.

The system controller 10 is a main controller of the MD recording/reproducing device 100. Every command to the system controller 10 for operation is given by a key input device 18. The system controller 10 sends control signals to devices in the MD recording/reproducing device 100 on the basis of the commands outputted from the key input device 18, and let the devices accomplish fast-search operation or random access reproduction and the like. The operation status of the MD recording/reproducing device 100 is displayed on the display 17. Moreover, in this embodiment, the selection of on/off state of the power supply is also performed by a key input device 18.

### [2] Recording/Reproducing System of MD recording/reproducing device

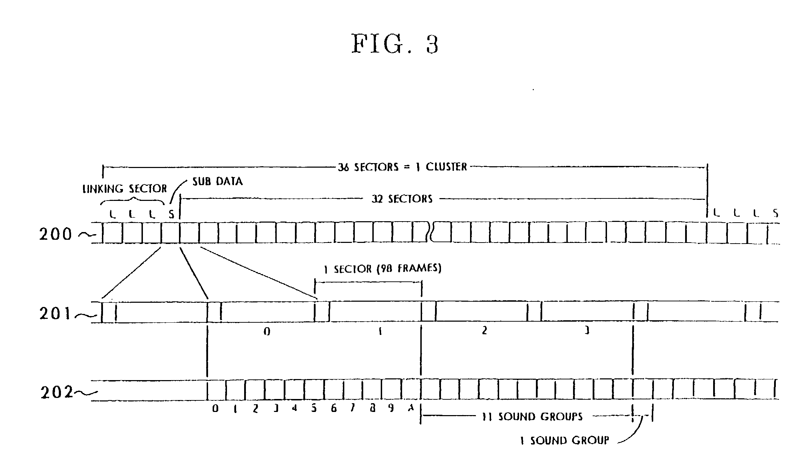

Referring to Fig. 3, structure of data applied in the MD will be now explained. In the recordable MD, the CD-ROM standard is adopted for data format. As shown in diagram 201 of FIG. 3 one sector comprises of 98 frames. As shown in diagram 202 of FIG. 3, in the MD, a sound group is defined as minimum unit of compression data. As shown in diagram 202 of FIG. 3 one sector is divided into .5 sound groups (Two sectors are divided into 11 sound groups). As shown in diagram 200 of FIG. 3 one cluster comprises of 36 sectors in total, which is divided into 32 sectors, linking area of 3 sectors, and sub code of 1 sector. The one cluster is the minimum unit of recording. Reading is accomplished every one sector.

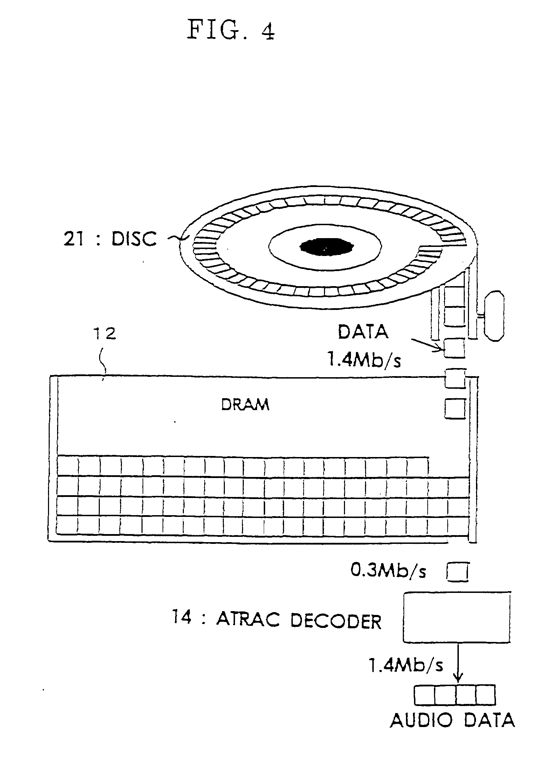

In the MD recording/reproducing device 100 the information recorded on the optical disc body 21 is read out at a data transmission rate of 1.4 Mb/s, and recorded on the DRAM 12, as shown of FIG. 4. However, the information is compressed down to one-fifth of the original information amount at the time of recording by the data compression decoder (ATRAC decoder) 14. If the amount of data read out at about 0.3 Mb/s, which corresponds to one-fifth of the data read out at about 1.4 Mb/s, is obtained, it is available to reproduce musical signals. Therefore reading of information from the DRAM 12 is accomplished at 0.3 Mb/s. Since there is difference between a data transmission rate for writing to the DRAM 12 and reading from the DRAM 12, it is available to temporarily store information read from the optical disc in the DRAM 12, and sequentially read the stored information to reproduce. For example, in case that the capacity of the DRAM 12 is 1 Mbit, it is available to store information, whose amount is the equivalent of about 3 seconds on reproduction time basis, in the DRAM 12. Therefore if a spot of laser beam goes off position on track because of movement of the optical pick up 2 by given vibration, it is possible to prevent the interruption of reproduction by putting the spot on the track during reproducing stored signals. In this manner shock proof mechanism is configured.

However if there is difference between transmission rate of writing information to the DRAM 12 and reading information from the DRAM 12, an overflow occurs in the DRAM 12 by reading information continuously from the optical disc body 21. For example, in case that the capacity of the DRAM 12 is 1 Mbit, the DRAM 12 becomes full at 0.9 second.

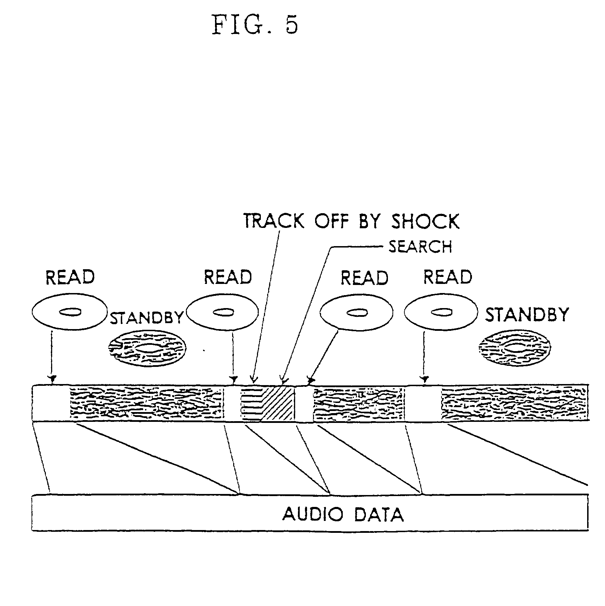

Consequently, in the MD recording/reproducing device 100, as shown in FIG. 5, after reading information from the DRAM 12 in a certain period, the amount of information stored in the DRAM 12 is controlled by suspending the reading in a predetermined period. The amount of reading and the period of suspending are out of standardization, therefore it is possible to design them as appropriate in accordance with capacity of memory and the like. That is, in the MD recording/reproducing device 100 intermittent reading is executed. Further, as shown in FIG. 5, in case that the spot goes off the position on the track because of disturbance in suspending period, desired track is immediately searched by using address information. Then if the spot is put on the track, the reading restarts. The one cluster is the minimum unit of recording. Reading is accomplished every one sector.

During recording, as in the case of reading, the information to be recorded is converted into digital output at a sampling frequency of 44.1 kHz and with 16 bits for quantization. Then the information is compressed down to one-fifth of the original information amount, and temporarily stored in shock proof memory at about 300 kb/s. Further, the data read out of memory at a data transmission rate of 1.4 Mb/s is recorded in the disc rotating at more than four times rate of data transmission.

Therefore even in recording, after recording data in the DRAM 12 in a certain period, the recording is suspended until next data is stored in the DRAM 12. At the time of storing the prescribed amount of data, the next recording restarts. That is, in the MD recording/reproducing device 100 intermittent recording is executed.

Further, in case of correct operation with no vibration, consecutive recording is executed in every cluster. During recording, address information and the like of the MD are always monitored, if the optical pick up 2 and the magnetic head 3 go off the recording track and the like, and under the prescribed condition, the recording is immediately suspended and re-recording (retry) is executed from head of the cluster again. Therefore the data of more than one cluster is stored in the DRAM 12 at lowest.

As shown in FIG. 2A, 2B, an MD, even if it is the pre-master MD, is provided with a lead-in area at its most inner circumferential portion. At the lead-in area a TOC (Table Of Contents) is previously recorded by using pits.

The TOC of the recordable MD includes information about the power of laser which is necessary for recording, a recordable area, the address of a UTOC (User Table Of Contents) and the like. As shown in FIG. 2B, a UTOC is recorded at a UTOC area 27 which is in recordable area, and includes the index information. The contents of the UTOC is stored in the recordable MD if the power is off.

As shown in FIG. 3, a cluster has a linking sector to link the clusters. Because in the recordable MD intermittent recording is executed by a cluster unit, and it is necessary to link each cluster with accurate. Therefore, the linking sector includes the portion called as link P (Pointer), in which an address of the next cluster is recorded. Accordingly, in the recordable MD, each cluster does not need to be recorded consecutively along the time base, and can be recorded such that it has discontinuous addresses.

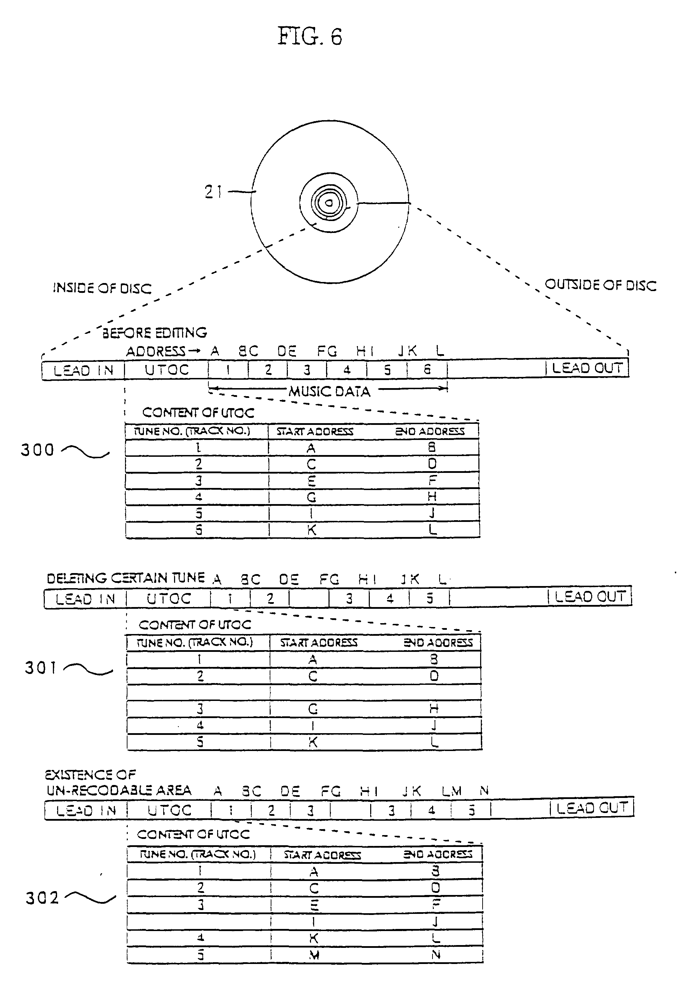

For example, in the recordable MD, as shown in diagram 300 of FIG. 6, in case that tunes are consecutively recorded from the first tune (Track No. 1) to the sixth tune (Track No. 6), the processing when the third tune (Track No. 3) is deleted will be explained as follows: In this case, it is not necessary to move data which is from the forth one to the sixth one. Simply, the areas in the UTOC to indicate track number of the third tune and to indicate the start address and the end address are made blanks. The track numbers of tunes which are from the forth tune to the sixth tune are renumbered to new ones which are from three to five. As a result of this kind of processing, free spaces not to be accessed in the disc at address E to F are generated. However as mentioned above, the intermittent reading is executed by using the DRAM 12, reproduction is performed from the second tune to the third tune without generating time lag. In this case music information is remained in the free spaces without being deleted. However the free spaces can be overwritten by new music information, so that the free spaces are not wasted.

Next, the processing when there is a unrecordable area in part of the record area will be explained as follows: For example, as shown in diagram 302 of FIG. 6C, it is possible to record correctly until partway of the third tune at the addresses E to F. However if there is a dust, damage or the like at the addresses G to H, it is not possible to record correctly there. Therefore the rest of music information are recorded in the areas at the addresses I to K. As a result, the address information written in the UTOC about the third tune is divided into two parts. If that situation is happened at the time of the first recording to the recordable MD, no music information is recorded in the areas at the addresses I to K, and the portion which has missing information is generated. That is, the clusters of which the third tune to be recorded as mentioned above consists are not physically continuous. However the intermittent reading is executed and each clusters are linked by the link P as mentioned above, so that the third tune can be reproduced as if they were continuously recorded.

### [3] Processing of Moving of the Optical Pick Up in MD recording/reproducing device

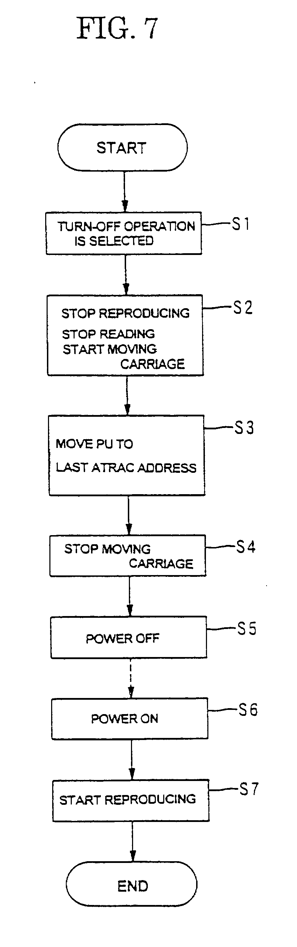

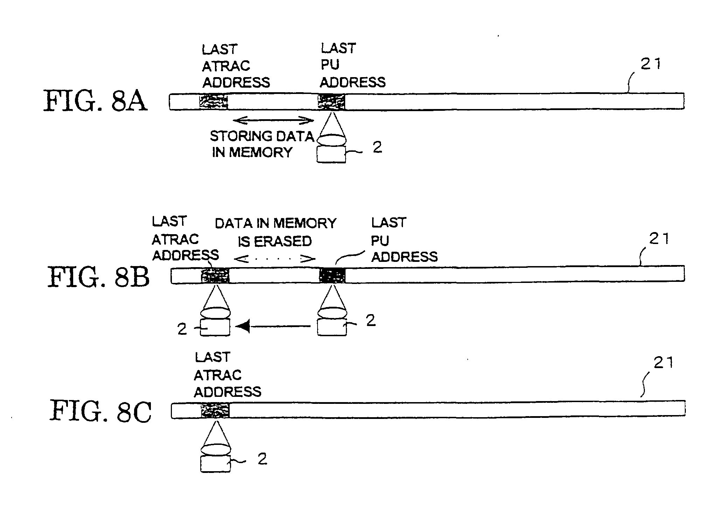

Referring to Fig. 7 and 8 the processing of moving of the optical pick up 2 in the MD recording/reproducing device 100 will be explained.

The processing of moving of the optical pick up 2 is a processing such that in the case the operation of turning off the power supply of the MD recording/reproducing device 100 is selected by a switch of the power supply or an ignition key or the like during reproduction; or by turning on a switch of an in-vehicle radio, the optical pick up 2 is moved to the position of the MD 21 where the information reproduced at that time is recorded.

As mentioned above, in the MD recording/reproducing device 100, the data compression by the ATRAC system and the shock proof structure by using the shock proof memory are adopted so that as shown in FIG. 4 there is the difference between the address of a reproduced data on the MD 21 which is the last object to reproduce (hereinafter the address is called "last ATRAC address") and the address of a read data which is the last object to read by the optical pick up 2 (hereinafter the address is called "last PU address").

Namely, as shown in FIG. 8A, the last ATRAC address is the past one of the time basis of reading by the optical pick up 2 as compared to the last PU address. The data recorded at the addresses which are from the next address of the last ATRAC address to a last address before the last PU address is stored in the shock proof memory 12.

In the case that the power supply of the MD recording/reproducing device 100 is turned off while the reproduced data recorded at the last ATRAC address is reproduced, the processing is executed as follows: The power supply will be off when either the switch of the power supply or an ignition key for a car is turned off, or when an in-vehicle radio is turned on while an in-vehicle MD recording/reproducing device is on. In the MD recording/reproducing device 100, the system controller 10 monitors the state of selection of any switched or keys. Then in the case the above-mentioned operation to turn off the power is occurred the system controller 10 determines the processing of turning off the power is selected as shown in FIG. 7 (Step S1).

Then the system controller 10 stops reproducing the data and reading the data by the optical pick up 2. Moreover, the system controller 10 moves the carriage 4 and starts searching the last ATRAC address (Step S2).

The shock proof memory 12 consists of DRAMs so that the stored data in the memory 12 is varnished when the power of the MD recording/reproducing device 100 is turned off. However, the last ATRAC address is stored in an internal memory of the system controller 10 so that the system controller 10 can find the last ATRAC address. Then the system controller 10 finds out the moving direction of the carriage 4 on the basis of the last PU address indicating the present position of the optical pick up 2 and the found the last ATRAC address, and lets the carriage 4 start to move.

Then the system controller 10 reads an address from the guide groove 40 of the MD 21 by using the optical pick up 2, and search the address corresponding to the found last ATRAC address (Step S3). As shown in FIG. 8B, on finding the corresponding address the system controller 10 stops the carriage 4 (Step S4), and turns off the power of the MD recording/reproducing device 100 (Step S 5).

After that, if the power switch is turned on, the system controller 10 determines the processing of turning on the power is selected, and turns on the power of the MD recording/reproducing device 100 (Step S 6).

At that time the optical pick up 2 is at the last ATRAC address according to the above-mentioned processing so that the system controller 10 immediately read the data recorded at the last ATRAC address by using the optical pick up 2, and starts reproducing the data (Step S7).

As mentioned above, in the MD recording/reproducing device 100, the optical pick up 2 is moved to the last ATRAC address just before the power is off so that if the power is on again, the data corresponding to the last data reproduced just before the power is off is reproduced immediately without being searched the last ATRAC address.

Therefore the necessary time for starting reproducing after the power is on can be reduced in comparison with the conventional MD recording/reproducing device which searches the last ATRAC address after the power is on, and starts reproducing after the search is completed.

It is not necessary to back up the contents of the shock proof memory so that electric power consumption is not increased.

In FIG. 8A to 8C, the data is recorded in continuous memory area of the MD. However, even in case the data is recorded in discontinuous area, the processing of moving of the optical pick up 2 is performed as mentioned above. The last address may exist more outer side in the direction of the radius of the MD than the last PU address. However, in this case, only the direction of start of the carriage 4 in the Step S2 of FIG. 7 is different from that in the above-mentioned case so that the processing of moving of the optical pick up 2 is performed as is in the above-mentioned case.

### (Second embodiment)

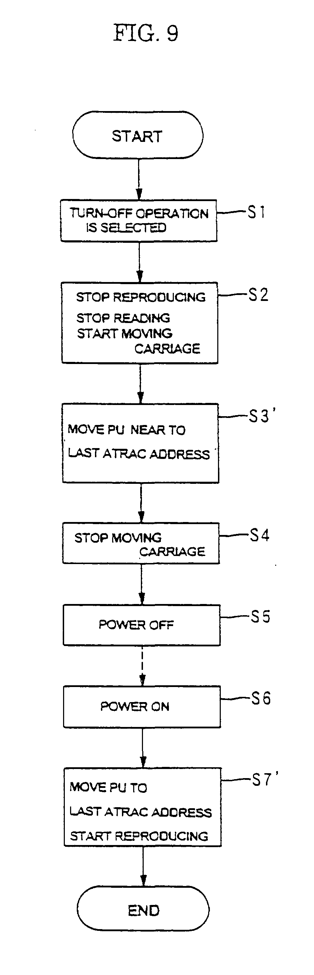

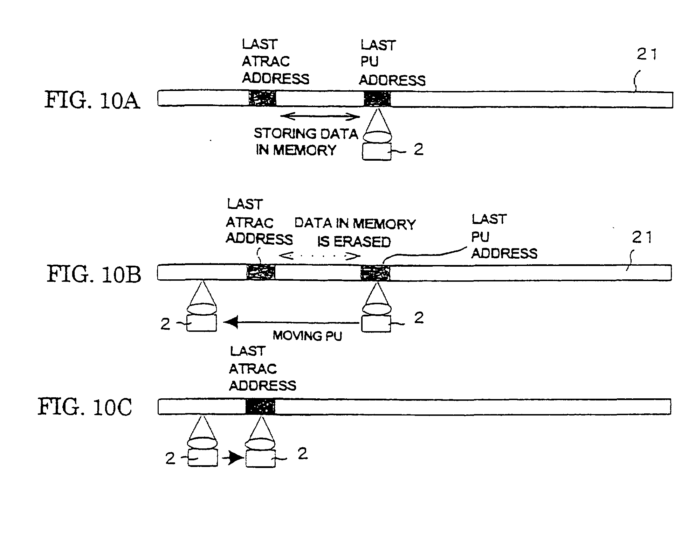

Referring to FIG. 9 and FIG. 10, the second embodiment of the present invention will be explained.

In the embodiment, the optical pick up 2 is moved near to the last ATRAC address without being moved just to the last ATRAC address.

If the system controller 10 determines the processing of turning off the power is selected (Step S1), it stops reproducing the data and reading the data by the optical pick up 2 at the position as shown in FIG. 10A. Moreover, It moves the carriage 4 and starts searching the last ATRAC address (Step S2).

Then the system controller 10 reads an address from the guide groove 40 of the MD 21 by using the optical pick up 2, and search an address near to the address corresponding to the stored last ATRAC address (Step S3').

The detailed address is described by the combination of the cluster, the sector, and the sound group. However, in the embodiment, the address is not searched as precisely as the value of the sound group corresponds to that of the stored last ATRAC address. The address is searched so that the difference between it and the stored last ATRAC address falls within given limits. For example, if the carriage 4 is moved near to the stored last ATRAC address, an address is read by the optical pick up 2. Then if the difference between the read address and the stored last ATRAC address falls within given limits, the carriage 4 is stopped at that position (Step S4). Alternatively, if the value of the cluster or the sector of the read address corresponds to that of the stored last ATRAC address, the carriage 4 is stopped at that position. Then the power is turned off after the above-mentioned processing of moving of the optical pick up 2 is completed (Step S5). Accordingly, the optical pick up 2 is stopped at the near position to the last ATRAC address as shown in FIG. 10 B.

Then if the power supply of MD recording/reproducing device 100 is turned on again (Step S6), the system controller 10 moves the optical pick up 2 to the last ATRAC address, and read the data recorded in the last ATRAC address after the movement of the pick up 2 is completed. Then the system controller 10 starts reproducing the data (Step S7').

In this manner, the search of the last ATRAC address before starting reproducing is started performing from the near position to the last ATRAC address so that the necessary time for searching is reduced markedly in comparison with a conventional device.

Moreover, in the embodiment, the movement of the optical pick up 2 before turning off the power is not necessary to be performed so that the position of the optical pick up 2 corresponds to the last ATRAC address. Therefore the necessary time from the selection of the operation of cutting the power off to the execution of cutting the power off is reduced in comparison with the first embodiment.

### (Third embodiment)

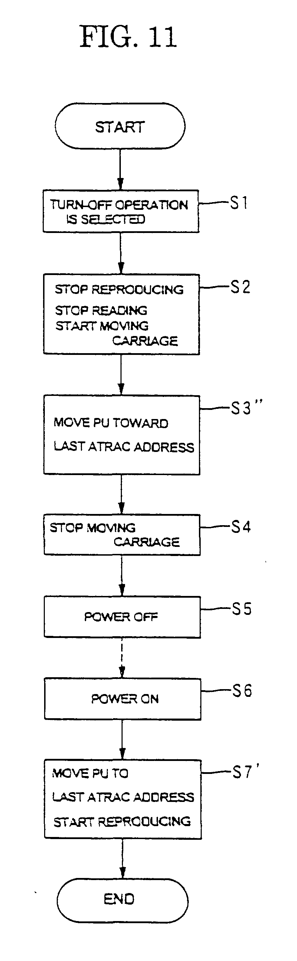

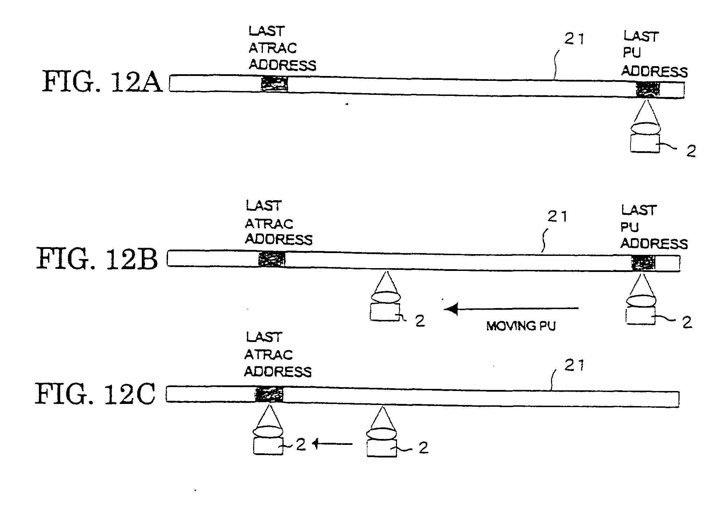

Referring to FIG. 11 and FIG. 12, the third embodiment of the present invention will be explained.

In the embodiment, the optical pick up 2 is moved from the last PU address to the direction of the last ATRAC address without the last ATRAC address or a near address to it is searched.

In the embodiment, it is assumed that the last ATRAC address is very far from the last PU address as shown in FIG. 12A.

If the system controller 10 determines the processing of turning off the power is selected (Step S1), it stops reproducing the data and reading the data by the optical pick up 2 at the position as shown in FIG. 10A. Moreover, It moves the carriage 4 and starts searching the last ATRAC address (Step S2).

Then the system controller 10 calculates moving distance on the basis of the stored last ATRAC address and the present last PU address, and obtains a value of voltage or a pulse width of an output signal for a motor to move the optical pick up 2 for the moving distance. The value of voltage or the pulse width is obtained by calculating or selecting it in a data table. The signal having the obtained value of voltage or the obtained pulse width is supplied to the motor through servo controller circuit 8. Then the optical pick up 2 is moved to the direction of the last ATRAC address as shown in FIG. 12B (Step S3"). Then if the output of the signal to the motor is completed, the carriage 4 is stopped at that position (Step S4).

Then the power is turned off after the above-mentioned processing of moving of the optical pick up 2 is completed (Step S5). Accordingly, the optical pick up 2 is stopped at the position nearer to the last ATRAC address than the last PU address as shown in FIG. 12 B.

Then if the power supply of MD recording/reproducing device 100 is turned on again (Step S6), the system controller 10 moves the optical pick up 2 to the last ATRAC address, and read the data recorded in the last ATRAC address after the movement of the pick up 2 is completed. Then the system controller 10 starts reproducing the data (Step S7').

In this manner, the search of the last ATRAC address before starting reproducing is started performing from the position nearer to the last ATRAC address that the last PU address so that the necessary time for searching is reduced markedly in comparison with a conventional device which searches the last ATRAC address within the long distance from the last PU address to the last ATRAC address.

The last PU address may exist more outer side of the MD than the last ATRAC address. However, in this case, only the direction of start of the carriage 4 in the Step S2 of FIG. 11 is different from that in the above-mentioned case so that the processing of moving of the optical pick up 2 is performed as is in the above-mentioned case.

### (Fourth embodiment)

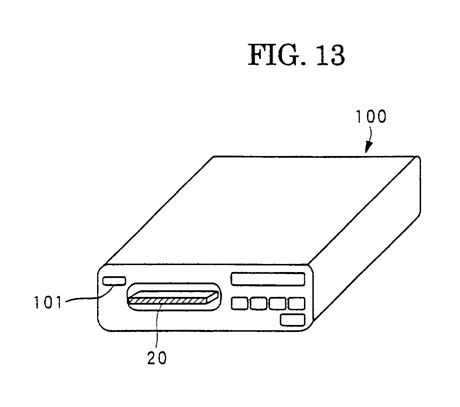

Referring to FIGs. 13 to 15, the fourth embodiment of the present invention will be explained.

The outline of the MD recording/reproducing device 100 in the embodiment is shown in FIG. 13. The MD recording/reproducing device 100 has an ejector button 101 for ejecting the information recording medium. The MD 20 is ejected from the MD recording/reproducing device 100 by pushing the ejector button 101. If the operation of ejecting the MD 20 is performed, the power supply is shut off. In case that the MD 20 is inserted in the MD recording/reproducing device 100 after the power shut off, the power is turned on, and the TOC of the disk body 21 is read. This processing is uniformly performed irrespective of whether the MD 20 is the last inserted MD.

In the embodiment the optical pick up 2 is moved to the position for reading the TOC before the power is turned off if the MD 20 is ejected.

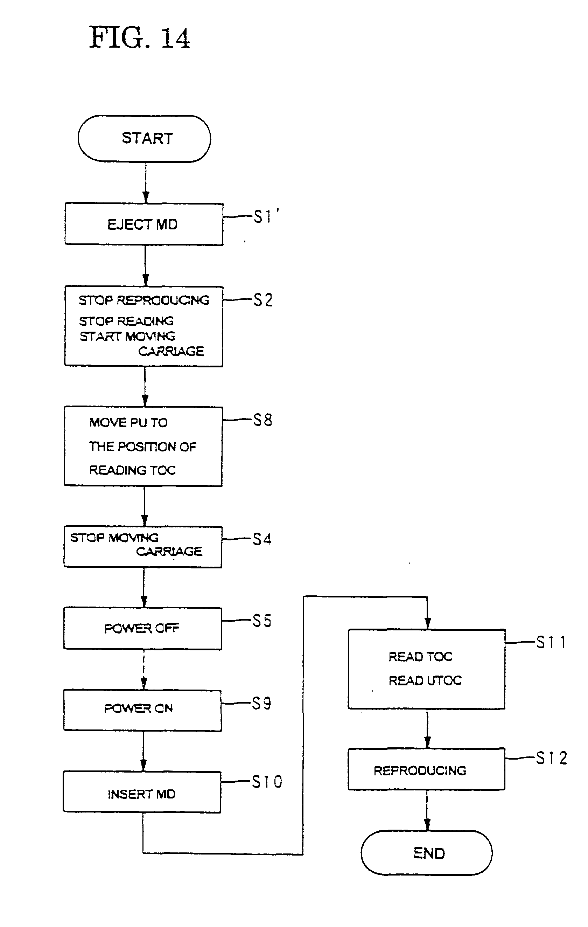

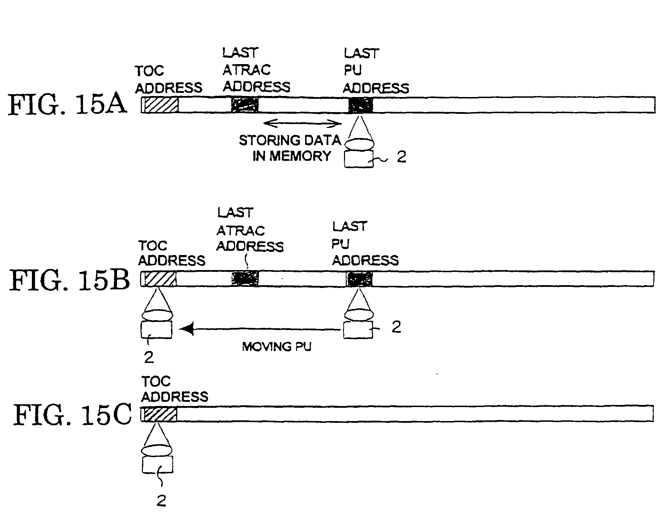

If the eject button 101 is pushed while the data of the last ATRAC address is being reproduced as shown in FIG. 15A, the system controller 10 ejects the MD 20 from the MD recording/reproducing device 100 as shown in FIG. 13 (FIG. 14; Step S1').

Then the system controller 10 stops reproducing the data and reading the data by the optical pick up 2 at the position as shown in FIG. 15A. Moreover, It moves the carriage 4 and starts searching an address of the TOC (Step S2).

The system controller 10 reads the address by using the optical pick up 2, and verifies agreement between the read address and the stored address of the TOC. The pick up 2 is moved until the two addresses are in exact agreement (Step S8).

Then if the two addresses are in exact agreement, the carriage 4 is stopped at that position (Step S4).

Then the power is turned off after the above-mentioned processing of moving of the optical pick up 2 is completed (Step S5). Accordingly, the optical pick up 2 is stopped at the address of the TOC as shown in FIG. 15B.

Then if the MD 20 is inserted again in the MD recording/reproducing device 100 (Step S9), the system controller 10 turns the power on again (Step S10), and read the contents of the TOC at the position of the pick up 2 as shown in FIG. 10C. Moreover, it reads the contents of the UTOC (Step S10), and starts reproducing the data (Step S12).

In this manner, if the MD 20 is ejected from the MD recording/reproducing device 100, the optical pick up 2 is moved to the position of address of the TOC. Accordingly, if the MD 20 is newly inserted in the MD recording/reproducing device 100, it is possible to read the contents of the TOC immediately. As a result, the necessary time for starting reproducing after the MD is inserted is reduced in comparison with a conventional device which searches the address of the TOC after the MD is inserted.

The above-mentioned embodiments are respectively explained. However, it is possible to combine any embodiments and select the processing of moving of the optical pick up according to physical relationship between the last ATRAC address and the last PU address.

In the above-mentioned embodiments the present invention is adopted to the MD recording/reproducing device which can perform both the recording information in the MD and reproducing information recorded in the MD. However, the present invention is not restricted to the device but can be adopted to the reproduction-only device.

Further, in the above-mentioned embodiments, the MD is used for a recording medium. However, this invention is not restricted to the embodiments. The invention can be adopted to the device having a memory corresponding to the shock proof memory and using the other recording medium, such as a CD (Compact Disc), a CD-R (Recordable CD), a CD-RW (Re-Writerable CD) and the like.

Moreover, the invention can be modified within the scope of its essential concept.

## Claims

1. An apparatus (100) for reproducing information recorded in an information recording medium, comprising
a pick up device (2) for reading information recorded in the information recording medium;
a memory device (12) for memorizing the information read by the pick up device (2);
a reproducing device (10, 14, 16) for reproducing the information memorized in the memory device (12);
a turning-off processing device (10) for performing a turning-off operation to turn a power of the apparatus (100) off; and
**characterized in that** it further comprises
a controlling device (8, 10) for moving the pick up device (2) toward a certain position if the turning-off operation is performed by the turning-off processing device (10) during the reproduction, the certain position corresponding to a recording position in the information recording medium where the information reproduced at the time of the turning-off operation is recorded.

2. An apparatus (100) according to claim 1, **characterized in that** said controlling device (10) stores position information indicating said recording position, and moves the pick up device (2) to the certain position corresponding to the recording position according to the position information if the turning-off operation is performed by the turning-off processing device (10) during the reproduction.

3. An apparatus (100) according to claim 1, **characterized in that** said controlling device (10) moves the pick up device (2) near to the certain position corresponding to said recording position if the turning-off operation is performed by the turning-off processing device (10) during the reproduction.

4. An apparatus (100) according to claim 1, **characterized in that** said controlling device (10) moves the pick up device (2) in a direction of the certain position corresponding to said recording position if the turning-off operation is performed by the turning-off processing device (10) during the reproduction.

5. An apparatus (100) according to claims 1 to 4, **characterized in that** said turning-off processing device (10) turns the power of the apparatus (100) off after said pick up device (2) has been moved toward the certain position.

6. An apparatus (100) according to claims 1 to 5, **characterized in that** said apparatus (100) further comprises an eject device (101) for ejecting the information recording medium, and said controlling device (10) moves the pick up device (2) to a position for reading an index information of the information recording medium if the information recording medium is ejected by the eject device (101).

7. A controlling method of controlling an information reproducing apparatus for reproducing information recorded in an information recording medium, said method comprising
a reading process of reading information recorded in the information recording medium by a pick up device (2);
a memorizing process for memorizing the information read by the pick up device (2) in a memory device (12) ;
a reproducing process of reproducing the information memorized in the memory device (12);
a turning-off process of performing a turning-off operation to turn a power of the apparatus (100) off; and
**characterized in that** said controlling method further comprises
a controlling process of moving the pick up device (2) toward a certain position if the turning-off operation is performed during the reproduction, the certain position corresponding to a recording position in the information recording medium where the information reproduced at the time of the turning-off operation is recorded.

8. A controlling method according to claim 7, **characterized in that** said controlling process stores position information indicating said recording position, and moves the pick up device (2) to the certain position corresponding to the recording position according to the position information if the turning-off operation is performed during the reproduction.

9. A controlling method according to claim 7, **characterized in that** said controlling process moves the pick up device (2) near to the certain position corresponding to said recording position if the turning-off operation is performed during the reproduction.

10. A controlling method according to claim 7, **characterized in that** said controlling process moves the pick up device (2) in a direction of the certain position corresponding to said recording position if the turning-off operation is performed during the reproduction.

11. A controlling method according to claims 7 to 10, **characterized in that** said controlling process turns the power of the apparatus (100) off after said pick up device (2) has been moved toward the certain position.

12. A controlling method according to claims 7 to 11, **characterized in that** said controlling method further comprises an ejecting process of ejecting the information recording medium, and said controlling process moves the pick up device (2) to a position for reading an index information of the information recording medium if the information recording medium is ejected.

## Patentansprüche

1. Vorrichtung (100) zum Wiedergeben von Information, die in einem Informationsaufzeichnungsmedium aufgezeichnet ist, aufweisend:
Eine Abtasteinrichtung (2) zum Lesen von Information, die in dem Informationsaufzeichnungsmedium aufgezeichnet ist;
eine Speichereinrichtung (12) zum Speichern der durch die Abtasteinrichtung (2) gelesenen Information;
eine Wiedergabeeinrichtung (10, 14, 16) zum Wiedergeben der in der Speichereinrichtung (12) gespeicherten Information;
eine Abschaltprozessablaufeinrichtung (10) zum Durchführen eines Abschaltvorgangs zum Abschalten der Stromversorgung der Vorrichtung (100), **dadurch gekennzeichnet,**
**dass** sie außerdem aufweist:
Eine Steuereinrichtung (8, 10) zum Bewegen der Abtasteinrichtung (2) in Richtung auf eine bestimmte Position, wenn der Ausschaltvorgang durch die Ausschaltprozessablaufeinrichtung (10) während der Wiedergabe durchgeführt wird, wobei die bestimmte Position einer Wiedergabeposition in dem Informationsaufzeichnungsmedium entspricht, in der die wiedergegebenen Information zum Zeitpunkt des Ausschaltvorgangs aufgezeichnet ist.

2. Vorrichtung (100) nach Anspruch 1, **dadurch gekennzeichnet, dass** die Steuereinrichtung (10) Positionsinformation speichert, die die Aufzeichnungsposition bezeichnet, und dass sie die Abtasteinrichtung (2) in die bestimmte Position, entsprechend der Aufzeichnungsposition, in Übereinstimmung mit der Positionsinformation bewegt, wenn der Abschaltvorgang durch die Abschaltprozessablaufeinrichtung (10) während der Wiedergabe durchgeführt wird.

3. Vorrichtung (100) nach Anspruch 1, **dadurch gekennzeichnet, dass** die Steuereinrichtung (10) die Abtasteinrichtung (2) in die Nähe der bestimmten Position, entsprechend der Aufzeichnungsposition, bewegt, wenn der Abschaltvorgang durch die Abschaltprozessablaufeinrichtung (10) während der Wiedergabe durchgeführt wird.

4. Vorrichtung (100) nach Anspruch 1, **dadurch gekennzeichnet, dass** die Steuereinrichtung (10) die Abtasteinrichtung (2) in Richtung der bestimmten Position, entsprechend der Aufzeichnungsposition, bewegt, wenn der Abschaltvorgang durch die Abschaltprozessablaufeinrichtung (10) während der Wiedergabe durchgeführt wird.

5. Vorrichtung (100) nach einem der Ansprüche 1 bis 4, **dadurch gekennzeichnet, dass** die Abschaltprozessablaufeinrichtung (10) den Strom der Vorrichtung (100) abschaltet, nachdem die Abtasteinrichtung (2) in Richtung auf die bestimmte Position bewegt wurde.

6. Vorrichtung (100) nach einem der Ansprüche 1 bis 5, **dadurch gekennzeichnet, dass** die Vorrichtung (100) außerdem eine Auswurfeinrichtung (101) zum Auswerfen des Informationsaufzeichnungsmediums aufweist, und dass die Steuereinrichtung (10) die Abtasteinrichtung (2) in die Position zum Lesen einer Indexinformation des Informationsaufzeichnungsmediums bewegt, wenn das Informationsaufzeichnungsmedium durch die Auswurfeinrichtung (101) ausgeworfen wird.

7. Steuerverfahren zum Steuern einer Informationswiedergabevorrichtung zum Wiedergeben von Information, die in einem Informationsaufzeichnungsmedium aufgezeichnet ist, wobei das Verfahren die Schritte aufweist:
Einen Lesevorgang zum Lesen von Information, die in dem Informationsaufzeichnungsmedium aufgezeichnet ist, durch eine Abtasteinrichtung (2);
einen Speichervorgang zum Speichern der Information, die durch die Abtasteinrichtung (2) gelesen wird, in einer Speichereinrichtung (12);
einen Wiedergabevorgang zum Wiedergeben der Information, die in der Speichereinrichtung (12) gespeichert ist;
einen Abschaltvorgang zum Durchführen eines Abschaltvorgangs zum Abschalten einer Stromversorgung der Vorrichtung (100);
**dadurch gekennzeichnet, dass** das Steuerverfahren außerdem die Schritte aufweist:
Einen Steuervorgang zum Bewegen der Abtasteinrichtung (2) in Richtung auf eine bestimmte Position, wenn der Abschaltvorgang während der Wiedergabe durchgeführt wird, wobei die bestimmte Position einer Aufzeichnungsposition in dem Informationsaufzeichnungsmedium entspricht, in der die zum Zeitpunkt des Ausschaltvorgangs wiedergegebene Information aufgezeichnet ist.

8. Steuerverfahren nach Anspruch 7, **dadurch gekennzeichnet, dass** der Steuervorgang die Positionsinformation, die die Aufzeichnungsposition bezeichnet, speichert und die Abtasteinrichtung (2) in die bestimmte Position, entsprechend der Aufzeichnungsposition, in Übereinstimmung mit der Positionsinformation bewegt, wenn der Abschaltvorgang während der Wiedergabe durchgeführt wird.

9. Steuerverfahren nach Anspruch 7, **dadurch gekennzeichnet, dass** der Steuervorgang die Abtasteinrichtung (2) in die Nähe einer bestimmten Position, entsprechend der Aufzeichnungsposition bewegt, wenn der Abschaltvorgang während der Wiedergabe durchgeführt wird.

10. Steuerverfahren nach Anspruch 7, **dadurch gekennzeichnet, dass** der Steuervorgang die Abtasteinrichtung (2) in einer Richtung der bestimmten Position, entsprechend der Wiedergabeposition bewegt, wenn der Abschaltvorgang während der Wiedergabe durchgeführt wird.

11. Steuerverfahren nach einem der Ansprüche 7 bis 10, **dadurch gekennzeichnet, dass** der Steuervorgang die Stromversorgung der Vorrichtung (100) abschaltet, nachdem die Abtasteinrichtung (2) in Richtung auf die bestimmte Position bewegt worden ist.

12. Steuerverfahren nach einem der Ansprüche 7 bis 11, **dadurch gekennzeichnet, dass** das Steuerverfahren außerdem einen Auswurfvorgang zum Auswerfen des Informationsaufzeichnungsmediums aufweist, und dass der Steuervorgang die Abtasteinrichtung (2) in eine Position zum Lesen einer Indexinformation des Informationsaufzeichnungsmediums bewegt, wenn das Informationsaufzeichnungsmedium ausgeworfen wird.

## Revendications

1. Appareil (100) pour reproduire des informations enregistrées sur un support d'enregistrement d'informations, comprenant :
un dispositif de tête de lecture (2) pour lire des informations enregistrées dans le support d'enregistrement d'informations ;
un dispositif de mémoire (12) pour mémoriser les informations lues par le dispositif de tête de lecture (2) ;
un dispositif de reproduction (10, 14, 16) pour reproduire les informations mémorisées dans le dispositif de mémoire (12) ;
un dispositif de traitement de coupure (10) pour réaliser une opération de coupure pour couper l'alimentation de l'appareil (100) ; et **caractérisé en ce qu'**il comprend en outre ;
un dispositif de commande (8, 10) pour déplacer le dispositif de tête de. lecture (2) vers une certaine position si l'opération de coupure est réalisée par le dispositif de traitement de coupure (10) pendant la reproduction, la certaine position correspondant à une position d'enregistrement dans le support d'enregistrement d'informations où les informations reproduites au moment de l'opération de coupure sont enregistrées.

2. Appareil (100) selon la revendication 1, **caractérisé en ce que** ledit dispositif de commande (10) stocke des informations de position indiquant ladite position d'enregistrement, et déplace le dispositif de tête de lecture (2) à une certaine position correspondant à la position d'enregistrement selon les informations de position si l'opération de coupure est réalisée par le dispositif de traitement de coupure (10) pendant la reproduction.

3. Appareil (100) selon la revendication 1, **caractérisé en ce que** ledit dispositif de commande (10) déplace le dispositif de tête de lecture (2) près de la certaine position correspondant à ladite position d'enregistrement si l'opération de coupure est réalisée par le dispositif de traitement de coupure (10) pendant la reproduction.

4. Appareil selon la revendication 1, **caractérisé en ce que** ledit dispositif de commande (10) déplace le dispositif de tête de lecture (2) dans une direction d'une certaine position correspondant à ladite position d'enregistrement si l'opération de coupure est réalisée par le dispositif de traitement de coupure (10) pendant la reproduction.

5. Appareil (100) selon la revendication 1 à 4, **caractérisé en ce que** ledit dispositif de traitement de coupure (10) coupe l'alimentation de l'appareil (100) après que ledit dispositif de tête de lecture (2) a été déplacé vers la certaine position.

6. Appareil (100) selon la revendication 1 à 5, **caractérisé en ce que** ledit appareil (100) comprend en outre un dispositif d'éjection (101) pour éjecter le support d'enregistrement d'informations, et ledit dispositif de commande (10) déplace le dispositif de tête de lecture (2) à une position pour lire des informations d'index du support d'enregistrement d'informations si le support d'enregistrement d'informations est éjecté par le dispositif d'éjection (101).

7. Procédé de commande pour commander un appareil de reproduction d'informations pour reproduire des informations enregistrées dans un support d'enregistrement d'informations, ledit procédé comprenant :
un traitement de lecture pour lire les informations enregistrées dans le support d'enregistrement d'informations par un dispositif de tête de lecture (2) ;
un traitement de mémorisation pour mémoriser les informations lues par le dispositif de tête de lecture (2) dans un dispositif de mémoire (12) ;
un traitement de reproduction pour reproduire les informations mémorisées dans le dispositif de mémoire (12) ;
un traitement de coupure pour réaliser une opération de coupure pour couper l'alimentation de l'appareil (100) ; et
**caractérisé en ce que** ledit procédé de commande comprend en outre :
un traitement de commande du déplacement du dispositif de tête de lecture (2) à une certaine position si l'opération de coupure est réalisée pendant la reproduction, la certaine position correspondant à une position d'enregistrement dans le support d'enregistrement d'informations où les informations reproduites au moment de l'opération de coupure sont enregistrées.

8. Procédé de commande selon la revendication 7, **caractérisé en ce que** ledit traitement de commande stocke des informations de position indiquant ladite position d'enregistrement, et déplace le dispositif de tête de lecture (2) à une certaine position correspondant à la position d'enregistrement selon les informations de position si l'opération de coupure est réalisée pendant la reproduction.

9. Procédé de commande selon la revendication 7, **caractérisé en ce que** ledit traitement de commande déplace le dispositif de tête de lecture (2) près de la certaine position correspondant à ladite position d'enregistrement si l'opération de coupure est réalisée pendant la reproduction.

10. Procédé de commande selon la revendication 7, **caractérisé en ce que** ledit traitement de commande déplace le dispositif de tête de lecture (2) dans une direction d'une certaine position correspondant à ladite position d'enregistrement si l'opération de coupure est réalisée pendant la reproduction.

11. Procédé de commande selon les revendications 7 à 10, **caractérisé en ce que** ledit traitement de commande coupe l'alimentation de l'appareil (100) après que ledit dispositif de tête de lecture (2) a été déplacé vers la certaine position.

12. Procédé de commande selon les revendications 7 à 11, **caractérisé en ce que** ledit procédé de commande comprend en outre un traitement d'éjection pour éjecter le support d'enregistrement d'informations, et ledit traitement de commande déplace le dispositif de tête de lecture (2) à une position pour lire des informations d'index du support d'enregistrement d'informations si le support d'enregistrement d'informations est éjecté.
